# EUROPÄISCHE PATENTSCHRIFT

(11) **EP 1 589 236 B1**
(45) Veröffentlichungstag und Bekanntmachung des Hinweises auf die Patenterteilung: **31.01.2007**
(21) Anmeldenummer: 05005918.7
(22) Anmeldetag: 18.03.2005
(51) Int. Cl.: F16B 7/18

(54) **Befestigungssystem zum Verbinden von Profilstäben**
A fixing system for connecting profiled bars
Système de fixation pour connecter des barres profilées

(30) Priorität: 24.03.2004 DE 202004004741 U
(43) Veröffentlichungstag der Anmeldung: 26.10.2005
(73) Patentinhaber: Möller, Olaf, 72770 Reutlingen (DE)
(72) Erfinder: Möller, Olaf, 72770 Reutlingen (DE)
(74) Vertreter: Kohler Schmid Möbus

(56) Entgegenhaltungen:
- EP-A- 0 458 069
- DE-A1- 10 200 964
- DE-U1-3202004 012 54

## Beschreibung

Die Erfindung betrifft ein Befestigungssystem zum Verbinden zweier insbesondere rechtwinklig aufeinander treffender Profilstäbe, wobei jeder der Profilstäbe an einer Außenseite eine parallel zur Stabachse verlaufende hinterschnittene Längsnut aufweist, wobei zumindest der erste Profilstab aus Metall besteht und im verbundenen Zustand der beiden Profilstäbe mit einem axialen Ende an der Außenseite der Längsnut des zweiten Profilstabes radial zu dessen Längsachse anliegt und mit diesem über einen Schraubverband befestigt ist, der eine Verbindungsschraube umfasst, welche durch eine Längsbohrung eines mit einem Außengewinde in der Längsnut des ersten Profilstabes befestigten im Wesentlichen zylindrischen Widerlagerstückes geführt und mit einer in der Längsnut des zweiten Profilstabes angeordneten Schraubenmutter in der Weise verschraubt ist, dass die Verbindungsschraube mit einem Schraubenkopf an das der Schraubenmutter abgewandte Ende des Widerlagerstückes anschlägt.

Ein solches System ist bekannt aus der EP 0 458 069 B1.

Derartige Verbindungssysteme werden zum Aufbau von Gerüsten oder Gestellen aus Profilstäben, insbesondere aus Aluminiumprofilleisten, eingesetzt. Dabei wird jeweils in eine hinterschnittene Längsnut eines Profilstabes eine Schraubenmutter eingeführt, die eine entsprechend der Längsnut geformte Außenkontur aufweist und in dieser in axialer Richtung verschiebbar ist. In das Innengewinde dieses so genannten Nutensteines, der in der Regel eine Kugelfixierung aufweist, wird eine Schraube mit entsprechendem Außenprofil eingeschraubt, die durch eine hinterschnittene Längsnut eines zweiten Profilstabes gesteckt wird, welcher an den ersten Profilstab in der Regel im rechten Winkel angelegt wird. Der Schraubenkopf dieser Verbindungsschraube schlägt am Ende des Einschraubvorgangs an ein zylindrisches Widerlagerstück an, welches zwischen der Schraubenmutter und dem Schraubenkopf am Endstück des angesetzten zweiten Profilstabes befestigt ist.

Um eine feste Verbindung mit dem zweiten Profilstab zu erhalten, wird nach der DE 102 00 964 A1 ein passendes Gewinde in die Längsnut des zweiten Profilstabes eingeschnitten und in dieses Gewinde das Widerlagerstück mit einem Außengewinde eingeschraubt.

Nach der Lehre der eingangs zitierten EP 0 458 069 B1 hingegen wird als Widerlagerstück eine Gewindehülse mit selbst schneidendem Außengewinde und insbesondere einer Schneidkanten bildenden Querausnehmung eingeschraubt, wobei sich eben ein Gewinde in dem entsprechenden Abschnitt des zweiten Profilstabes durch spanende Materialabhebung bildet. Gegenüber der DE 102 00 964 A1 werden damit die beiden Arbeitsgänge des Einschneidens eines Gewindes in den zweiten Profilstab und des anschließenden Einschraubens des Widerlagerstücks zu einem einzigen Arbeitsgang zusammengefügt, nämlich dem Eindrehen des Widerlagerstücks mit selbst schneidendem Außengewinde.

Nachteilig bei dem Befestigungssystem nach der EP 0 458 069 B1 ist jedoch der relativ aufwändige Aufbau und die dadurch höheren Kosten bei der Herstellung des Widerlagerstücks, da auf jeden Fall eine Querbohrung erforderlich ist, welche Schneidkanten bildet und ein Schneiden in das Metallprofil ermöglicht. Weiterhin nachteilig ist das Abtragen von Material bei diesem Schneidevorgang, wodurch einerseits die Wandung des betreffenden Profilstabes in diesem Bereich geschwächt wird, andererseits das ausgeschnittene Material entfernt werden muss oder funktionsmindernd unkontrolliert in der Profilnut liegen bleibt. Außerdem müssen der äußere Kerndurchmesser des selbst schneidenden Gewindes bei dem Widerlagerstück nach der EP 0 458 069 B1 sowie die dazugehörigen Gewindeflanken, um effektiv greifen und schneiden zu können, so stark ausgeprägt sein, dass beim Vorgang des Einführens des Widerlagerstücks der gesamte Außendurchmesser des Profilstabs in diesem Bereich ausgedehnt wird. Damit wird aufgrund dieses bekannten Aufbaus des Widerlagerstücks die Stabilität des Schraubverbands insgesamt gemindert, was sich insbesondere auf den Halt unter Zug und die gegen das Ausreißen des Widerlagerstücks aufzubauenden Gegenkräfte nachteilig auswirkt. Außerdem wird für das Eindrehen aufgrund des Gewindeschneidvorganges ein erheblicher Kraftaufwand erforderlich, was oft dazu führt, dass das Widerlagerstück nicht gerade und koaxial in den Profilstab eingebracht wird, sondern mit seiner Achse am Ende unter einem Winkel zur Achse des Profilstabs verläuft.

Aufgabe der vorliegenden Erfindung ist es demgegenüber, ein Befestigungssystem der eingangs beschriebenen Art mit möglichst einfachen Mitteln dahin gehend zu verbessern, dass die oben beschriebenen Nachteile vermieden werden, wobei insbesondere die Festigkeit des Schraubverbandes erhöht werden soll.

Erfindungsgemäß wird diese Aufgabe auf ebenso überraschend einfache wie wirkungsvolle Art und Weise dadurch gelöst, dass das Außengewinde des Widerlagerstückes als selbst formendes Walzgewinde ohne Schneidkanten gestaltet ist, und dass der Außendurchmesser des Widerlagerstückes dem Querschnitt der hinterschnittenen Längsnut des ersten Profilstabes so angepasst ist, dass das Widerlagerstück beim Eindrehen in diese Längsnut durch nicht-spanende, verdichtende Materialverdrängung in der Längsnut ein Gegengewinde formt. Aufgrund des Einsatzes eines formenden anstelle eines selbst schneidenden Gewindes wird das aufwändige Anbringen einer Querausnehmung zur Ausbildung von Schneidkanten im Widerlagerstück überflüssig. Außerdem wird nunmehr der Gewindeabschnitt für das Widerlagerstück nicht spanend und unter Materialabtrag geschnitten, sondern durch lokale verdichtende Materialverdrängung in der Längsnut eingeformt. Dadurch wird eine Verbindung mit deutlich gesteigerter Festigkeit des Profilstabs in diesem Bereich erzeugt, da die Bearbeitung drückend und nicht spanend erfolgt. Außerdem wird durch den bei einer selbst formenden Hülse geringeren Kerndurchmesser des Außengewindes viel weniger Druck auf die Innenseiten der Längsnut ausgeübt, sodass sich der Profilstab in diesem Bereich erheblich weniger in radialer Richtung ausdehnt und somit eine größere Festigkeit behält.

Bei Teilen aus thermoplastischen Kunststoffen ist der Einsatz von selbstformenden Schrauben an sich bekannt (siehe beispielsweise die irmendruckschrift "ATI 1114 d, e" mit dem Titel "Selbstformende Schrauben für thermoplastische Kunststoffe" der Firma Bayer AG aus dem Jahre 1997).

Besonders bevorzugt ist eine Ausführungsform des erfindungsgemäßen Befestigungssystems, bei der das Walzgewinde des Widerlagerstückes einsatzgehärtet ist. Damit können besonders gute Ergebnisse beim Einformen des Gewindes in der Längsnut des Profilstabs erreicht werden.

Um eine besonders große Schraubengröße für den Schraubverband benutzen zu können, wird bei einer weiteren bevorzugten Ausführungsform der Erfindung das Verhältnis des Außendurchmessers des Widerlagerstückes zum Durchmesser seiner Längsbohrung kleiner als 1,5 , vorzugsweise ungefähr 1,45 gewählt. Wie oben erwähnt, kann im Gegensatz zu einem selbst schneidenden Außengewinde ein selbst formendes Außengewinde mit erheblich geringeren radialen Ausmaßen hergestellt werden, wodurch die Längsbohrung auch einen viel größeren Durchmesser aufweisen kann. Dieses wiederum ermöglicht den Einsatz von Verbindungsschrauben eines größeren Durchmessers, was im Endeffekt die Festigkeit des Schraubverbandes in nicht-linearer Weise ganz erheblich erhöht.

Daher ist auch eine Ausführungsform des erfindungsgemäßen Befestigungssystems bevorzugt, bei der das Außengewinde des Widerlagerstückes ein Verhältnis von Außendurchmesser zu Kerndurchmesser < 1,2 , vorzugsweise ungefähr 1,1 aufweist. Neben der Möglichkeit zur Schaffung einer Längsbohrung mit größerem Durchmesser wird hierdurch auch Material und Gewicht am Widerlagerstück eingespart, ohne dass die für die Erfindung wesentlichen Funktionen, insbesondere das verdichtende Anformen eines Gewindes im Profilstab, beeinträchtigt würden.

Vorteilhaft ist auch eine Ausführungsform der Erfindung, bei der die Gewindegänge des Außengewindes des Widerlagerstückes eine Flankensteilheit von mindestens 50%, vorzugsweise etwa 60% aufweisen. Hierdurch wird einerseits eine äußerst exakte Längsführung in der Achse des Nutkanals erreicht, wodurch ein gleichmäßig exaktes und achszentriertes Gewinde geformt wird, andererseits wird lokal eine sehr hohe Verdichtung des bei der Materialverformung verdrängten Metalls im Bereich des anzuformenden Gewindes erzielt.

Das Einsetzen des Widerlagerstückes wird bei einer weiteren bevorzugten Ausführungsform der Erfindung dadurch erleichtert, dass das Widerlagerstück an seinem der Schraubenmutter abgewandten Ende eine sternförmige Aussparung zur Aufnahme eines Torx® Antriebs für die Montage des Widerlagerstückes in der Längsnut des ersten Profilstabes aufweist.

Zum besseren Zentrieren des Widerlagerstücks bei seiner Montage ist bei einer vorteilhaften Ausführungsform der Erfindung vorgesehen, dass das Widerlagerstück sich von seinem der Schraubenmutter zugewandten Ende zu seinem der Schraubenmutter abgewandten Ende hin konisch verjüngt, vorzugsweise mit einer Konizität von etwa 0,1.

Besonders bevorzugt ist eine weitere Ausführungsform der Erfindung, bei der das Widerlagerstück an seinem der Schraubenmutter abgewandten Ende über eine axiale Länge I, die zwischen 10% und 30%, vorzugsweise etwa 20% der Gesamtlänge L des Widerlagerstückes beträgt, kein Außengewinde trägt. Dieser gewindefreie Teil des hülsenförmigen Widerlagerstücks kann beim Einführen des Widerlagerstücks in die Längsnut des Profilstabs als Zentrierdorn eingesetzt werden, was eine exakte achszentrierte Längsführung erleichtert.

Vorteilhaft weist das Außengewinde des Widerlagerstückes zwischen 5 und 10, vorzugsweise etwa 8 Gewindegänge pro Zentimeter axialer Länge auf. In diesem Bereich lassen sich die besten Ergebnisse beim Anformen des gewünschten Gewindes in der Längsnut des Profilstabs erzielen.

Bevorzugt wird zumindest der erste Profilstab des erfindungsgemäßen Befestigungssystems, in dessen Längsnut mit dem erfindungsgemäß vorgeschlagenen Widerlagerstück ein Gewinde eingeformt werden soll, aus Aluminium oder einer Aluminiumlegierung bestehen. Das Widerlagerstück selbst kann aus Stahl, vorzugsweise getempertem bzw. angelassenem Stahl, aufgebaut sein.

Um eine größere Dehnung des Widerlagerstückes beim Eindrehen in die Längsnut des ersten Profilstabes aufgrund von Reibungswärme zu vermeiden, wird bei einer besonders bevorzugten Ausführungsform der Erfindung das Außengewinde des Widerlagerstückes vor dem Eindrehen mit einer geeigneten Gleitbeschichtung versehen. Dadurch können die Eindrehkräfte relativ gering gehalten und ein Spanen beim Eindrehen der Hülse sicher verhindert werden. Typischerweise wird die Gleitbeschichtung auf der Basis von Öl, insbesondere dem im Handel unter dem Markennamen OKS 1300® erhältlichen Silikon freien Gleitöl aufgebaut sein. Für besondere Anwendungen kann die Gleitbeschichtung aber auch auf der Basis von Graphit und/oder MbS₂ und/oder Silikon aufgebaut sein. Die Gleitbeschichtung wird entweder vor dem Eindrehen des Widerlagerstückes auf das Außengewinde aufgesprüht oder mittels Tauchbeschichtung aufgebracht.

Bei einer weiteren bevorzugten Ausführungsform des erfindungsgemäßen Befestigungssystems ist das Außengewinde des Widerlagerstückes als "Self-Lock"-Gewinde ausgeführt. Diese Gewindeart bietet eine Sicherung gegen unbeabsichtigtes Herausdrehen des Widerlagerstückes aus dem ersten Profilstab.

Bevorzugt ist auch eine Ausführungsform der Erfindung, bei der zwischen dem Schraubenkopf der Verbindungsschraube und dem Widerlagerstück eine Federscheibe angeordnet ist. Auch dadurch kann ein unbeabsichtigtes Herausdrehen des Widerlagerstückes aus der Profilnut beim Anzug der Verbindungsschraube verhindert werden. Außerdem wird die Verbindung auf diese Weise auch bei starken Vibrationen nicht gelöst.

Eine vorteilhafte Weiterbildung dieser Ausführungsform zeichnet sich dadurch aus, dass die Verbindungsschraube eine M8-Schraube, vorzugsweise mit einer Länge zwischen 30 und 50mm, insbesondere 40mm, ist, und dass die Federscheibe einen Innendurchmesser zwischen 8,0 und 8,3mm, vorzugsweise 8,1 mm, einen Außendurchmesser zwischen 9,8 und 10,3mm, vorzugsweise 9,9mm ,sowie eine Scheibendicke zwischen 0,1 und 2,0mm, vorzugsweise 1,0mm aufweist.

Bei einer weiteren besonders bevorzugten Ausführungsform der Erfindung schließlich ist zumindest bis zum Eindrehen des Widerlagerstückes in die Längsnut des ersten Profilstabes zwischen dem Widerlagerstück und der Verbindungsschraube ein Gummi- oder Kunststoffring vorgesehen, der des Widerlagerstückes in Verbindungsschraube bis zum Einbau im erfindungsgemäßen Befestigungssystem zusammenhält. Die Stärke dieses Gummi- oder Kunststoffringes ist vorzugsweise so dimensioniert ist, dass sich der Ring beim Eindrehen der Verbindungsschraube in das Gewinde der Schraubenmutter selbst zerstört und seine Reste irgendwann abfallen. Besonders vorteilhaft ist eine Weiterbildung dieser Ausführungsform, bei der der Ring erst nach mehrmaligem Eindrehen und Lösen der Verbindungsschraube zerstört wird, so dass der mit dem Ring zusammen gehaltene Verband von Widerlagerstück und Verbindungsschraube auch nach wiederholter Montage und Demontage noch erhalten bleibt.

Weitere Merkmale und Vorteile der Erfindung ergeben sich aus der nachfolgenden detaillierten Beschreibung von Ausführungsbeispielen der Erfindung anhand der Figuren der Zeichnung, sowie aus den Ansprüchen.

In der schematischen Zeichnung sind Ausführungsbeispiele der Erfindung dargestellt, welche in der nachfolgenden Beschreibung näher erläutert werden.

Es zeigen:
- Fig. 1: eine schematische, halbgeschnittene Seitenansicht auf ein erfindungsgemäßes Befestigungssystem;
- Fig. 2a: einen schematischen Längsschnitt durch ein erfindungsgemäß modifiziertes Widerlagerstück; und
- Fig. 2b: eine Draufsicht auf das Widerlagerstück nach Fig. 2a.

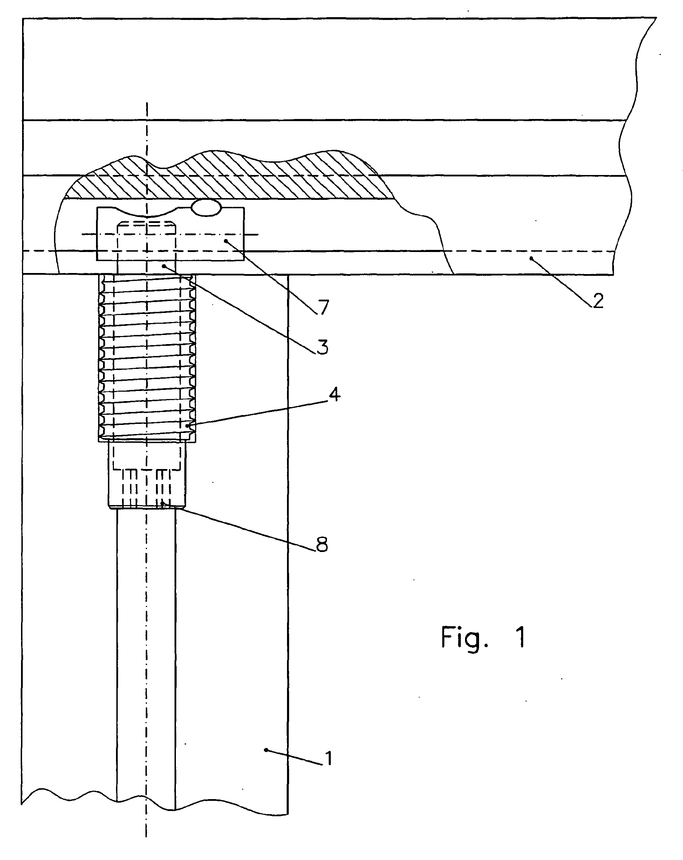

Das in Fig.1 gezeigte erfindungsgemäße Befestigungssystem umfasst einen ersten Profilstab 1 aus Metall, insbesondere Aluminium, der mit einer parallel zur Stabachse verlaufenden hinterschnittenen Längsnut ausgeführt ist. Der erste Profilstab 1 trifft im rechten Winkel auf einen in dieser Ausführungsform gleichartig aufgebauten zweiten Profilstab 2 und ist mit diesem über einen Schraubverband befestigt, welcher eine Verbindungsschraube 3 umfasst, die durch eine Längsbohrung 5 eines i.w. zylindrischen Widerlagerstückes 4 mit Außengewinde 6 geführt und mit einer Schraubenmutter 7 verschraubt ist, welche ihrerseits in der Längsnut des zweiten Profilstabes 2 geführt ist. Dabei schlägt der Schraubenkopf 8 der Verbindungsschraube 3 gegen das der Schraubenmutter 7 abgewandte Ende des Widerlagerstückes 4, welches wiederum fest in der Längsnut des ersten Profilstabes 1 verankert ist.

Die feste Verankerung des Widerlagerstückes 4 in der Längsnut des ersten Profilstabes 1 erfolgt über das speziell geformte Außengewinde 6 des Widerlagerstückes 4, das als selbstformendes Gewinde ohne Schneidkanten gestaltet ist, wobei der Außendurchmesser des Widerlagerstückes 4 dem Querschnitt der hinterschnittenen Längsnut des ersten Profilstabes 1 so angepasst ist, dass das Widerlagerstück 4 beim Eindrehen in diese Längsnut durch nicht-spanende, verdichtende Materialverdrängung in der Längsnut ein Gegengewinde formt.

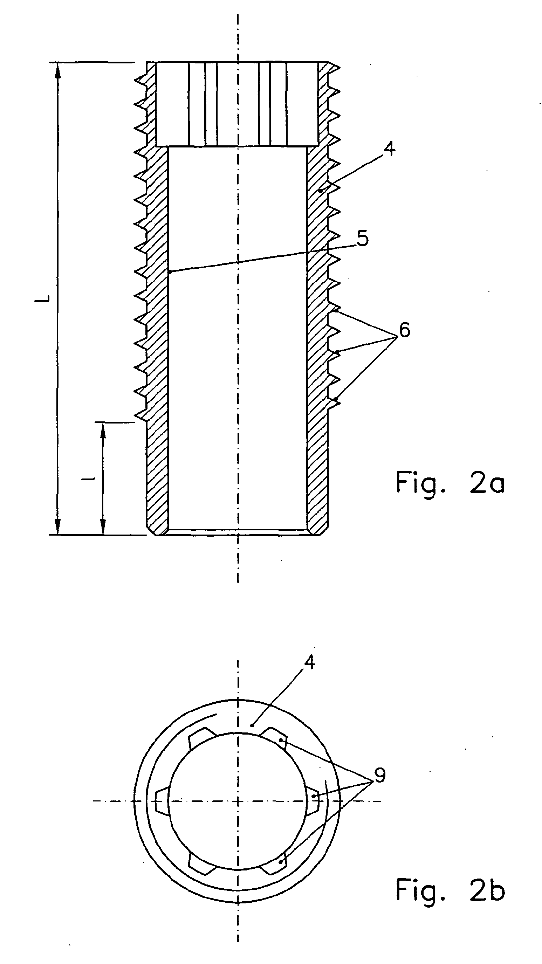

Das Außengewinde 6 des Widerlagerstückes 4 ist vorzugsweise ein einsatzgehärtetes Walzgewinde mit einem Verhältnis von Außendurchmesser zu Kerndurchmesser < 1,2 vorzugsweise ungefähr 1,1, einer Flankensteilheit der Gewindegänge von mindestens 50%, vorzugsweise etwa 60% und zwischen 5 und 10, vorzugsweise etwa 8 Gewindegängen pro Zentimeter axialer Länge. Das Verhältnis des Außendurchmessers des Widerlagerstückes 4 zum Durchmesser seiner Längsbohrung 5 ist, wie in Fig. 2a gezeigt, kleiner als 1,5 , vorzugsweise ungefähr 1,45. Außerdem verjüngt sich das Widerlagerstück 4 von seinem der Schraubenmutter 7 zugewandten Ende zu seinem der Schraubenmutter 7 abgewandten Ende hin konisch, vorzugsweise mit einer Konizität von etwa 0,1. Wie ebenfalls aus Fig. 2a ersichtlich ist, trägt das Widerlagerstück 4 an seinem der Schraubenmutter 7 abgewandten Ende über eine axiale Länge I, die zwischen 10% und 30%, vorzugsweise etwa 20% der Gesamtlänge L des Widerlagerstückes 4 beträgt, kein Außengewinde 6, was wie eine Art Zentrierdorn das korrekte axiale Einführen des Widerlagerstückes 4 in die Längsnut des ersten Profilstabes 1 erleichtert.

In Fig. 2b ist eine Ausführungsform des Widerlagerstückes 4 dargestellt, bei der dieses an seinem der Schraubenmutter 7 abgewandten Ende eine sternförmige Aussparung 9 zur Aufnahme eines Torx® Antriebs für die Montage des Widerlagerstückes 4 in der Längsnut des ersten Profilstabes 1 aufweist.

Um eine größere Dehnung des Widerlagerstückes 4 beim Eindrehen in die Längsnut des ersten Profilstabes 1 aufgrund von Reibungswärme zu vermeiden, wird das Außengewinde 6 des Widerlagerstückes 4 vor dem Eindrehen günstiger weise mit einem Tropfen Öl oder einer anderen geeigneten Gleitbeschichtung versehen.

## Patentansprüche

1. Befestigungssystem zum Verbinden zweier insbesondere rechtwinklig aufeinander treffender Profilstäbe (1, 2), wobei jeder der Profilstäbe (1, 2) an einer Außenseite eine parallel zur Stabachse verlaufende hinterschnittene Längsnut aufweist, wobei zumindest der erste Profilstab (1) aus Metall besteht und im verbundenen Zustand der beiden Profilstäbe (1, 2) mit einem axialen Ende an der Außenseite der Längsnut des zweiten Profilstabes (2) radial zu dessen Längsachse anliegt und mit diesem über einen Schraubverband befestigt ist, der eine Verbindungsschraube (3) umfasst, welche durch eine Längsbohrung (5) eines mit einem Außengewinde (6) in der Längsnut des ersten Profilstabes (1) befestigten im Wesentlichen zylindrischen Widerlagerstückes (4) geführt und mit einer in der Längsnut des zweiten Profilstabes (2) angeordneten Schraubenmutter (7) in der Weise verschraubt ist, dass die Verbindungsschraube (3) mit einem Schraubenkopf (8) an das der Schraubenmutter (7) abgewandte Ende des Widerlagerstückes (4) anschlägt,
**dadurch gekennzeichnet,**
**dass** das Außengewinde (6) des Widerlagerstückes (4) als selbstformendes Walzgewinde ohne Schneidkanten gestaltet ist, und dass der Außendurchmesser des Widerlagerstückes (4) dem Querschnitt der hinterschnittenen Längsnut des ersten Profilstabes (1) so angepasst ist, dass das Widerlagerstück (4) beim Eindrehen in diese Längsnut durch nicht-spanende, verdichtende Materialverdrängung in der Längsnut ein Gegengewinde formt.

2. Befestigungssystem nach Anspruch 1, **dadurch gekennzeichnet, dass** das Walzgewinde (6) des Widerlagerstückes (4) einsatzgehärtet ist.

3. Befestigungssystem nach einem der vorhergehenden Ansprüche, **dadurch gekennzeichnet, dass** das Verhältnis des Außendurchmessers des Widerlagerstückes (4) zum Durchmesser seiner Längsbohrung (5) kleiner als 1,5 , vorzugsweise ungefähr 1,45 ist.

4. Befestigungssystem nach einem der vorhergehenden Ansprüche, **dadurch gekennzeichnet, dass** das Außengewinde (6) des Widerlagerstückes (4) ein Verhältnis von Außendurchmesser zu Kerndurchmesser < 1,2 vorzugsweise ungefähr 1,1 aufweist.

5. Befestigungssystem nach einem der vorhergehenden Ansprüche, **dadurch gekennzeichnet, dass** die Gewindegänge des Außengewindes (6) des Widerlagerstückes (4) eine Flankensteilheit von mindestens 50%, vorzugsweise etwa 60% aufweisen.

6. Befestigungssystem nach einem der vorhergehenden Ansprüche, **dadurch gekennzeichnet, dass** das Widerlagerstück (4) an seinem der Schraubenmutter (7) abgewandten Ende eine sternförmige Aussparung (9) zur Aufnahme eines Torx® Antriebs für die Montage des Widerlagerstückes (4) in der Längsnut des ersten Profilstabes (1) aufweist.

7. Befestigungssystem nach einem der vorhergehenden Ansprüche, **dadurch gekennzeichnet, dass** das Widerlagerstück (4) sich von seinem der Schraubenmutter (7) zugewandten Ende zu seinem der Schraubenmutter (7) abgewandten Ende hin konisch verjüngt, vorzugsweise mit einer Konizität von etwa 0,1.

8. Befestigungssystem nach einem der vorhergehenden Ansprüche, **dadurch gekennzeichnet, dass** das Widerlagerstück (4) an seinem der Schraubenmutter (7) abgewandten Ende über eine axiale Länge I, die zwischen 10% und 30%, vorzugsweise etwa 20% der Gesamtlänge L des Widerlagerstückes (4) beträgt, kein Außengewinde (6) trägt.

9. Befestigungssystem nach einem der vorhergehenden Ansprüche, **dadurch gekennzeichnet, dass** das Außengewinde (6) des Widerlagerstückes (4) zwischen 5 und 10, vorzugsweise etwa 8 Gewindegänge pro Zentimeter axialer Länge aufweist.

10. Befestigungssystem nach einem der vorhergehenden Ansprüche, **dadurch gekennzeichnet, dass** das Außengewinde (6) des Widerlagerstückes (4) mit einer Gleitbeschichtung versehen ist, die vorzugsweise auf der Basis von Öl und/oder Graphit und/oder MbS₂ und/oder Silikon aufgebaut ist.

11. Befestigungssystem nach einem der vorhergehenden Ansprüche, **dadurch gekennzeichnet, dass** das Außengewinde (6) des Widerlagerstückes (4) als "Self-Lock"-Gewinde ausgeführt ist.

12. Befestigungssystem nach einem der vorhergehenden Ansprüche, **dadurch gekennzeichnet, dass** zumindest bis zum Eindrehen des Widerlagerstückes (4) in die Längsnut des ersten Profilstabes (1) zwischen dem Widerfagerstück (4) und der Verbindungsschraube (3) ein Gummi- oder Kunststoffring vorgesehen ist, dessen Stärke vorzugsweise so dimensioniert ist, dass er sich beim Eindrehen der Verbindungsschraube (3) in das Gewinde der Schraubenmutter (7) selbst zerstört.

13. Befestigungssystem nach einem der vorhergehenden Ansprüche, **dadurch gekennzeichnet, dass** zwischen dem Schraubenkopf (8) der Verbindungsschraube (3) und dem Widerlagerstück (4) eine Federscheibe angeordnet ist.

## Claims

1. Fastening system for connecting two profiled bars (1, 2), in particular meeting at right angles, each of the profiled bars (1,2) being provided on one outer face with an undercut longitudinal groove extending parallel to the bar axis, at least the first profiled bar (1) consisting of metal and, in the connected state of the two profiled bars (1, 2), bearing by means of one axial end against the outer face of the longitudinal groove in the second profiled bar (2) radially to the longitudinal axis thereof and being fastened thereto by means of a bolted connection including a connecting bolt (3) which is passed through a longitudinal bore (5) in a substantially cylindrical abutment piece (4) fastened to an external thread (6) in the longitudinal groove in the first profiled bar (1) and is connected to a nut (7) arranged in the longitudinal groove in the second profiled bar (2) in such a manner that the connecting bolt (3) bears by means of a head (8) against the end of the abutment piece (4) directed away from the nut (7), **characterised in that** the external thread (6) of the abutment piece (4) is designed as a self-forming rolled thread without cutting edges and that the outer diameter of the abutment piece (4) is adapted to the cross section of the undercut longitudinal groove in the first profiled bar (1) in such a manner that the abutment piece (4) forms a mating thread when it is screwed into this longitudinal groove by means of non-cutting, compacting material displacement in the longitudinal groove.

2. Fastening system according to claim 1, **characterised in that** the rolled thread (6) of the abutment piece (4) is case-hardened.

3. Fastening system according to one of the preceding claims, **characterised in that** the ratio of the outer diameter of the abutment piece (4) to the diameter of its longitudinal bore (5) is less than 1.5, preferably approximately 1.45.

4. Fastening system according to one of the preceding claims, **characterised in that** the external thread (6) of the abutment piece (4) has a ratio of outer diameter to core diameter of < 1.2, preferably approximately 1.1.

5. Fastening system according to one of the preceding claims, **characterised in that** the threads of the external thread (6) of the abutment piece (4) have a slope of at least 50 %, preferably approximately 60 %.

6. Fastening system according to one of the preceding claims, **characterised in that** the abutment piece (4) is provided at its end directed away from the nut (7) with a star-shaped recess (9) for receiving a TORX® drive for mounting the abutment piece (4) in the longitudinal groove in the first profiled bar (1).

7. Fastening system according to one of the preceding claims, **characterised in that** the abutment piece (4) tapers from its end directed towards the nut (7) to its end directed away from the nut (7), preferably with a conicity of approximately 0.1.

8. Fastening system according to one of the preceding claims, **characterised in that** the abutment piece (4) has no external thread (6) at its end directed away from the nut (7) over an axial length 1 which is between 10 % and 30 %, preferably approximately 20 % of the total length L of the abutment piece (4).

9. Fastening system according to one of the preceding claims, **characterised in that** the external thread (6) of the abutment piece (4) has between 5 and 10, preferably approximately 8 threads per centimetre of axial length.

10. Fastening system according to one of the preceding claims, **characterised in that** the external thread (6) of the abutment piece (4) is provided with an anti-friction coating preferably formed on the basis of oil and/or graphite and/or MbS₂ and/or silicone.

11. Fastening system according to one of the preceding claims, **characterised in that** the external thread (6) of the abutment piece (4) is designed as a self-lock thread.

12. Fastening system according to one of the preceding claims, **characterised in that** a rubber or plastic ring is provided between the abutment piece (4) and the connecting bolt (3) at least until the abutment piece (4) is screwed into the longitudinal groove in the first profiled bar (1), its thickness preferably being such that it destroys itself when the connecting bolt (3) is screwed into the thread of the nut (7).

13. Fastening system according to one of the preceding claims, **characterised in that** a spring washer is arranged between the head (8) of the connecting bolt (3) and the abutment piece (4).

## Revendications

1. Système de fixation pour relier deux barres profilées (1, 2) qui se rencontrent en particulier à angle droit, chacune des barres profilées (1, 2) étant pourvue, sur un côté extérieur, d'une rainure longitudinale en contre-dépouille s'étendant parallèlement à l'axe de la barre, au moins la première barre profilée (1) étant en métal et, à l'état relié des deux barres profilées (1, 2), étant en contact par son extrémité axiale avec le côté extérieur de la rainure longitudinale de la seconde barre profilée (2) radialement à l'axe longitudinal de celle-ci et y étant reliée par l'intermédiaire d'une liaison vissée, laquelle comprend une vis de liaison (3) qui traverse un trou longitudinal (5) d'une pièce de contre-appui sensiblement cylindrique (4) fixée par un filetage extérieur (6) dans la rainure longitudinale de la première barre profilée (1) et qui est vissée à un écrou (7) disposé dans la rainure longitudinale de la seconde barre profilée (2), de façon que la vis de liaison (3) soit en contact par une tête de vis (8) avec l'extrémité de la pièce de contre-appui (4) orientée à l'opposé de l'écrou (7),
**caractérisé en ce que**
le filetage extérieur (6) de la pièce de contre-appui (4) est conformé en filetage roulé autoformant sans arêtes de coupe, et **en ce que** le diamètre extérieur de la pièce de contre-appui (4) est adapté à la section transversale de la rainure longitudinale en contre-dépouille de la première barre profilée (1), de façon que, lors de son vissage dans cette rainure longitudinale, la pièce de contre-appui (4) forme un contre-filetage par refoulement de matière compressif sans enlèvement de copeaux.

2. Système de fixation selon la revendication 1, **caractérisé en ce que** le filetage roulé (6) de la pièce de contre-appui (4) est cémenté.

3. Système de fixation selon une des revendications précédentes, **caractérisé en ce que** le rapport du diamètre extérieur de la pièce de contre-appui (4) au diamètre de son trou longitudinal (5) est inférieur à 1,5, de préférence égal à environ 1,45.

4. Système de fixation selon une des revendications précédentes, **caractérisé en ce que** le filetage extérieur (6) de la pièce de contre-appui (4) présente un rapport du diamètre extérieur au diamètre de fond < 1,2, de préférence égal à environ 1,1.

5. Système de fixation selon une des revendications précédentes, **caractérisé en ce que** les pas du filetage extérieur (6) de la pièce de contre-appui (4) présentent une inclinaison de flanc d'au moins 50 %, de préférence d'environ 60 %.

6. Système de fixation selon une des revendications précédentes, **caractérisé en ce que** la pièce de contre-appui (4) est pourvue, à son extrémité orientée à l'opposé de l'écrou (7), d'un évidement en étoile (9) pour recevoir un moyen d'entraînement Torx® pour le montage de la pièce de contre-appui (4) dans la rainure longitudinale de la première barre profilée (1).

7. Système de fixation selon une des revendications précédentes, **caractérisé en ce que** la pièce de contre-appui (4) se rétrécit de manière conique, de préférence avec une conicité d'environ 0,1, de son extrémité orientée vers l'écrou (7) vers son extrémité orientée à l'opposé de l'écrou (7).

8. Système de fixation selon une des revendications précédentes, **caractérisé en ce qu'**à son extrémité orientée à l'opposé de l'écrou (7), la pièce de contre-appui (4) est dépourvue de filetage extérieur (6) sur une longueur axiale 1 comprise entre 10 % et 30 %, de préférence égale à environ 20 % de la longueur totale L de la pièce de contre-appui (4).

9. Système de fixation selon une des revendications précédentes, **caractérisé en ce que** le filetage extérieur (6) de la pièce de contre-appui (4) possède entre 5 et 10, de préférence environ 8 pas par centimètre de longueur axiale.

10. Système de fixation selon une des revendications précédentes, **caractérisé en ce que** le filetage extérieur (6) de la pièce de contre-appui (4) est muni d'un revêtement glissant réalisé de préférence à base d'huile et/ou de graphite et/ou de MbS₂ et/ou de silicone.

11. Système de fixation selon une des revendications précédentes, **caractérisé en ce que** le filetage extérieur (6) de la pièce de contre-appui (4) est conformé en filetage autobloquant.

12. Système de fixation selon une des revendications précédentes, **caractérisé en ce qu'**au moins jusqu'au vissage de la pièce de contre-appui (4) dans la rainure longitudinale de la première barre profilée (1) est prévue, entre la pièce de contre-appui (4) et la vis de liaison (3), une bague en caoutchouc ou en matière plastique dont l'épaisseur est dimensionnée de préférence de façon qu'elle s'autodétruise lors du vissage de la vis de liaison (3) dans le filetage de l'écrou (7).

13. Système de fixation selon une des revendications précédentes, **caractérisé en ce qu'**une rondelle élastique est disposée entre la tête de vis (8) de la vis de liaison (3) et la pièce de contre-appui (4).
